(19) Europäisches Patentamt / European Patent Office / Office européen des brevets

(11) **EP 2 418 612 A1**

(12) **EUROPEAN PATENT APPLICATION**

(43) Date of publication:
**15.02.2012 Bulletin 2012/07**

(51) Int Cl.:
***G06Q 10/00*** (2012.01)

(21) Application number: **11176817.2**

(22) Date of filing: **08.08.2011**

| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Greene, Daniel H**<br>  **Sunnyvale, CA California 94087 (US)**<br>• **Hindi, Haitham**<br>  **Menlo Park, CA California 94025 (US)** |
|---|---|
| (30) Priority: **10.08.2010 US 853809** | (74) Representative: **Skone James, Robert Edmund**<br>**Gill Jennings & Every LLP**<br>**The Broadgate Tower**<br>**20 Primrose Street**<br>**London EC2A 2ES (GB)** |
| (71) Applicant: **Palo Alto Research Center Incorporated**<br>**Palo Alto, California 94304 (US)** | |

(54) **Data center customer cost determination mechanisms**

(57) A data center management system may include a data center customer profile corresponding to a data center customer. The data center customer profile may include a data center resource usage model and a service level agreement (SLA). A data center resource optimization module may determine a data center resource allocation for the data center customer based on the data center customer profile. A data center customer cost determination module may determine a data center customer cost that represents a cost to the data center of providing data center resources to the data center customer.

FIG. 1

EP 2 418 612 A1

## EP 2 418 612 A1

**Description**

The disclosed technology relates to the field of data centers and, more particularly, to various techniques pertaining to data center customer cost determination mechanisms that may be implemented in connection with data center operations.

A typical data center serves hundreds or even thousands of different data center customers by leasing machine resources to the data center customers. Each data center customer generally has some level of data center resource requirements that has associated therewith a certain cost to the data center itself. Data center resource requirements typically include demand for computational resources such as memory, disk space, processors, and bandwidth. For example, a data center customer having a significantly larger amount of data to be stored than other data center customers of the same data center will typically require a significantly greater amount of data storage resources, such as memory, from the data center.

In order to more efficiently manage a data center, it is important that the data center be provided with such data center customer cost information as accurately as possible via a data center manager, for example. Such information may be used by the data center manager for making decisions concerning possible pricing changes, billing practices, and service level agreement (SLA) design. In situations where the data center experiences a greater than expected usage of data center resources by the data center customer, for example, the data center manager may decide to apportion the cost back to the data center customer by raising rates. Unfortunately, present notions of data center customer cost are difficult to compute.

Accordingly, there remains a need for efficient and scalable methods for practically computing the costs of a data center's customers to the data center itself.

Certain exemplary embodiments will now be described with reference to the accompanying drawings, which can be summarized as follows.

FIG. 1 illustrates an example of a data center optimization system having a data center management interface, a data center customer registration module, a resource optimization module, a data center customer cost determination module, an operations center, and a resource usage model update module.

FIG. 2 is a flowchart illustrating a first example of a method of determining a data center customer cost using a collection of subsets of data center customers in accordance with embodiments of the disclosed technology.

FIG. 3 is a flowchart illustrating a second example of a method of determining a data center customer cost using a collection of permutations in accordance with embodiments of the disclosed technology.

FIG. 4 is a flowchart illustrating a first example of a method of determining a data center customer cost using data center customer grouping techniques in accordance with embodiments of the disclosed technology.

FIG. 5 illustrates an example of a graphical representation of two sets of data center customer groups that may be identified by the data center customer cost determination module in accordance with embodiments of the disclosed technology.

FIG. 6 illustrates an example of a graphical representation of determining an approximation of the Shapley value for a data center customer within a grouping using approximation techniques in accordance with embodiments of the disclosed technology.

FIG. 7 is a flowchart illustrating a second example of a method 700 of determining a data center customer cost using data center customer grouping techniques in accordance with embodiments of the disclosed technology.

FIG. 8 illustrates an example of a graphical representation of a shuffle combined with permutations to create a collection of subsets of data center customer groups as performed in connection with the data center customer cost determination method illustrated in FIG. 7.

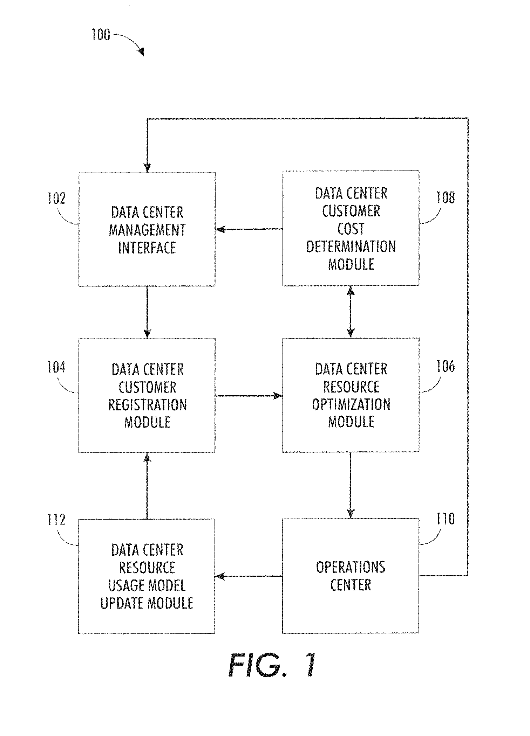

FIG. 1 illustrates an example of a data center optimization system 100 in accordance with embodiments of the disclosed technology. In the example, the data center optimization system 100 includes a data center management module 102, a data center customer registration module 104, a data center resource optimization module 106, and a data center customer cost determination module 108. As used herein, the data center management module 102 may include the involvement of a human data center manager in certain decision-making processes such as those pertaining to pricing, billing, and SLA design tasks. In the example, the data center optimization system 100 also includes an operations center 110 such as a group of data center servers, for example, and a data center resource usage model update module 112.

In the example, the data center customer registration module 104 may be used to register each new data center customer by facilitating execution of a data center customer-specific service level agreement (SLA) with the data center and establishing a data center resource usage model for the data center customer, where the data center resource usage model generally includes a quantification of the specific data center resources requested by the data center customer. For example, the data center customer registration module 104 may query the data center customer as to how much of each particular data center resource such as memory, disk space, and CPU bandwidth that the data center customer would like to request. The data center optimization system 100 may then create a data center customer profile for the data center customer and store both the SLA and the data center resource usage model for the data center customer as part of the data center customer profile.

The data center resource optimization module 106 may determine an initial and/or optimal data center resource allocation for a given data center customer based on the data center customer's SLA and data center resource usage model, for example, and then assign the data center resource allocation to the operations center 110, which may include a group of data center servers, for execution by the operations center 110. In certain embodiments, the data center resource optimization module 106 may use statistical packing techniques such as those described in co-pending U.S. Patent Application No. 12/253,111, titled "STATISTICAL PACKING OF RESOURCE REQUIREMENTS IN DATA CENTERS" and filed on October 16, 2008, which application is fully incorporated herein by reference. One having ordinary skill in the art will appreciate, however, that various other data center resource optimization techniques may be employed by the data center resource optimization module 106.

The initial data center resource allocation determined by a typical data center resource optimization module may be optimal in that it represents an optimal usage of the data center resources to meet the needs of multiple customers of the data center but it does not necessarily provide, however, information on the cost of provisioning individual customers in the data center. In embodiments of the disclosed technology, the data center resource optimization module 106 may interact with the data center customer cost determination module 108, which may determine or estimate the cost to the data center of servicing, such as providing memory and processing resources to the particular data center customer.

In certain embodiments, the data center management module 102 may send a request to the data center customer cost determination module 108 for a determination of the data center customer cost for a particular data center customer. Alternatively, the data center resource management module 102 may send a request to the data center customer cost determination module 108 for a data center customer cost determination corresponding to a particular group of data center customers.

The data center customer cost determination module 108 may use any of the techniques described herein to determine the cost to the data center of the particular data center customer or group of data center customers. The determination of a data center customer cost for a given data center customer or group of data center customers may provide various business feedback pertaining to pricing, billing, SLA design or re-design, etc. For example, a data center manager may wish to investigate pricing terms for a particular data center customer or group of data center customers whose cost is higher than expected, such as when the data center customer's usage of the data center resources exceeds a level of usage that the data center expected based on the data center customer's profile. Consequently, providing a sound and fair costing mechanism may enable data center managers and business divisions to do a better job of understanding their operating costs, pricing their services, and billing their data center customers in an equitable manner.

The techniques described herein may be used to generate and provide accurate cost information to a data center manager. There are scenarios in which a data center may use such cost information to directly bill customers, such as in an in-house data center with internal customers and budget centers, for example. Alternative scenarios that include external customers who need a simple way to understand their bills, for example, may involve implementations in which simpler billing formulas are based on one or more categories of SLAs and actual resources used, for example. In situations where such simple billing formulas are used, application of the accurate cost feedback techniques described herein may enable the data center manager to adjust the simple billing formulas to reflect an accurate understanding of the costs of servicing the data center customers.

The data center resource usage model update module 112 may monitor the operations center 110 and employ modeling techniques such as hidden Markov modeling or computing histograms. The system may use such modeling techniques to model customer resource needs as initially provided via the data center customer registration module 104 and provide dynamic load prediction to the data center resource optimization module 106. Based on the monitoring of the operations center 110, the data center resource usage model update module 112 may provide recommendations to the data center customer registration module 104. For example, the data center resource usage model update module 112 may recommend that the data center customer registration module 104 revise the data center customer profile for a particular data center customer given the data center customer's usage of the operations center 110 over a certain period of time. In alternative embodiments, the data center resource usage model update module 112 may either revise the data center customer profile directly or provide a newly created data center customer profile to replace the existing data center customer profile for the data center customer.

INDIVIDUAL CUSTOMER COST

Computing the costs of individual data center customers in situations where the optimization algorithm applied has determined resource provisioning, e.g., the number of servers that must be running, for an ensemble of data center customers can be problematic. For example, at least some of the extra provisioning used to ensure that data center customers will have adequate resources for future loads may be shared among multiple data center customers. Accordingly, it is generally not possible to directly associate costs with individual data center customers in such scenarios.

A simple computation of the marginal cost of adding an individual data center customer to an existing group of data center customers will likely understate the cost of the individual data center customer because the resource provisioning for the group as a whole may already include a significant amount of reserved but unused resources to meet contingency requirements so that members to the group may have the necessary resources according to their SLAs. In such situations, the marginal cost for the additional data center customer is typically low. In certain situations where the SLA requirements of an additional customer are low, there may already be enough resources reserved for the group of data center customers and, as a result, the marginal cost of the additional data center customer to the data center may be zero.

To address the partitioning of costs across a jointly-optimized group of data center customers, implementations of the disclosed technology may include the application of techniques derived from cooperative games, such as the Shapley value. These techniques may provide a principled way of apportioning data center customer costs. In order to more equitably treat all of a group of data center customers, these techniques may involve computations over all subsets of the group of customers. Such techniques, while effective for small numbers of customers, may become computationally prohibitive for large numbers of customers.

Described herein are methods for accelerating and approximating data center cost computations that do not compute over all subsets of customers, but instead exploit the structure of the definition of costs and groupings of customers to systematically reduce the subsets of customers considered and, as a result, render the computation scalable and efficient. While the techniques described herein generally pertain to the Shapley value, such techniques may also be applied to other solution concepts for cooperative games such as the Nucleolus or the Core as well as other variations of these concepts that involve computations over subsets of data center customers.

Described herein are various scalable and efficient methods of determining data center customer cost. In certain embodiments, the determination of a data center customer cost for a given data center customer may be made by performing an approximate computation of the data center cost for the data center customer. In certain embodiments, randomization techniques such as shuffling may be used in determining the data center customer cost. In alternative embodiments, grouping techniques such as clustering may be used. Such techniques may include grouping data center customers into groups by SLAs, for example, which may greatly reduce the amount of computation to be performed for a large number of data center customers.

DATA CENTER CUSTOMER COST EXPRESSED AS A SHAPLEY VALUE

As used herein, a data center customer cost generally refers to a determination or estimation that reflects the cost to a data center of servicing the data center customer. In certain embodiments of the disclosed technology, the data center customer cost for a given data center customer is expressed as a Shapley Value. Consider the following definition of the marginal cost for "$a$ after $S$," where $a$ is a particular data center customer in the set $A$ of all of the data center customers, e.g., a set of size $n$ data center customers, where $S$ denotes a subset of other data center customers within $A$, and where $v(S)$ denotes a quantification of a total optimal data center resource usage for the subset $S$, e.g., a cost for the subset S:

$$m(S, a) := v(S \cup \{a\}) - v(S) \quad \text{(Equation 1)}$$

Accordingly, one having ordinary skill in the art will recognize that the measure of marginal cost for the particular data center customer "$a$ after $S$" may be defined by subtracting the total optimal data center resource usage of the subset of other data center customers $S$ from the total optimal data center resource usage of the subset $S$ taken with the data center customer $a$.

Either or both of the total optimal data center resource usage values in Equation 1 may be computed by a data center resource optimizer such as the data center resource optimization module 106 of FIG. 1, for example, in response to requests for the determinations by a data center customer cost determination module such as the data center customer cost determination module 108 of FIG. 1. The system may request the data center resource optimization module 106 to compute values for hypothetical subsets $S$ that are different from the entire set A that it is optimizing for the operations center 110 of FIG. 1. Alternatively, the system may request the data center resource optimization module 106 to directly compute the marginal cost $m(S,a)$ in Equation 1. The determinations of the total optimal data center resource usage values are not, however, limited to a data center resource optimization module; rather, a data center resource optimization module is but one of various types of mechanisms that may determine total optimal data center resource usage values.

One having ordinary skill in the art will appreciate that the marginal or incremental cost of a given data center customer $a$ depends on the particular subset of other data center customers $S$ with which it is grouped as well as the size of $S$. For example, adding a data center customer $a$ to a small subset $S$ frequently requires the reserving of additional resources, while adding a data center customer to a large subset may be more easily accomplished due to the sharing of resource reservations. Moreover, a given set of heterogeneous data center customers in the set $S$ may interact in complex ways with *a* in terms of their net effect on the total optimal resource usage. So if the marginal costs of all elements of *A* are computed by adding them one-by-one to *S*, the result may be significantly biased. The Shapley value addresses such a scenario by averaging over all possible ordering of elements as they are added to *S* to assembly *A*.

In the example, the Shapley value of the data center customer *a* is denoted by s(*A*, *a*), which is defined as the average marginal cost of the data center customer *a* taken over all possible groupings *S* of other data center customers within *A*. It follows that the Shapley value computation may be written as:

$$s(\mathcal{A}, a) \quad := \quad \sum_{S \subset \mathcal{A} \backslash \{a\}} \frac{|\mathcal{S}|!(n - 1 - |\mathcal{S}|)!}{n!} \; m(\mathcal{S}, a).$$

(Equation. 2)

One having ordinary skill in the art will note, however, that the summation over all subsets *S* of *A* involves $2^{n-1}$ evaluations of the expression *m*(S, *a*), which can make prohibitive the practical evaluation of the data center resource cost for groups of data center customers that are greater than a certain size, *e.g.*, groups of more than ten data center customers.

DATA CENTER CUSTOMER COST DETERMINATION USING RANDOMIZATION TECHNIQUES

An alternative but equivalent definition of the Shapley value *s*(*A*, *a*) for the data center customer a may be written as follows:

$$s(\mathcal{A}, a) \quad := \quad \frac{1}{n} \sum_{i=1}^{n} \binom{n-1}{i}^{-1} \sum_{\substack{S \subset \mathcal{A} \backslash \{a\} \\ |S| = i}} m(\mathcal{S}, a)$$

(Equation. 3)

One having ordinary skill in the art will note that the expression inside the first summation represents the average of marginal costs taken over all subsets of size *i*. This interpretation suggests a natural way of determining an approximation $\hat{s}(A, \alpha)$ of the Shapley value for the data center customer $\alpha$ where, rather than evaluating a marginal cost *m*(*S*, *a*) for all sets of size *i* an average is taken over a collection (e.g., a "reasonably representative" collection) of subsets *S* of *A*.

In certain embodiments, a randomization technique may be used to generate *m* random sample sets *S* of size *i*, for example, where each of the other data center customers has an equal chance of being selected. The number of random samples of subsets each size *i* may be adjusted to improve the accuracy of the results. Such a technique may be applied as an approximation to the full sum in Equation 3. Also, because of the equal likelihood of choosing any data center customer for the subsets *S*, these techniques may be considered equitable in the treatment of any particular individual data center customer.

Because randomization may create variation in the results and, therefore, the sum of the Shapley values for all of the individual data center customers may not exactly equal the total cost *v*(*A*), a more structured pattern may be used to choose the collection of subsets *S* of *A*. These structured collections may reduce the computation by computing significantly fewer *v*(...) evaluations in Equation 1 and, in some cases, those that are computed are used in more than one marginal computation.

In certain embodiments, the structured collection of sample sets *S* may be generated from a permutation $\pi$ of the elements *A*. Hereafter $a_j$ will be used to indicate that *j* is the index of the element $\alpha$ in the set *A*. Sets S may be defined as prefixes of a permutation:

$$\mathcal{S}(\pi, j) = \{k | \pi(k) < \pi(j)\}$$

(Equation 4)

By using this notation, the Shapley value for $a_j$ may be expressed as an average over all permutations as follows:

$$s(\mathcal{A}, a_j) = \frac{1}{n!} \sum_{\pi} m(\mathcal{S}(\pi, j), a_j)$$

(Equation 5)

For large $n$ it can be prohibitively expensive to compute all permutations. A single permutation, however, could be inaccurate. For example, customers appearing early in the permutation would typically have higher costs than those appearing at the end. The system may address these issues by approximating the Shapley value using a family of permutations $\pi^{(1)}$, $\pi^{(2)}$, ... that are cyclic permutations of a single permutation, so that each element appears equally frequently at different positions in the permutation. Other permutations, such as a shuffle permutation, may be used in addition to or in replacement of the cyclic permutation to generate a family of permutations that are useful in approximating the Shapley value.

In situations where a small structured family of permutations is used to approximate the Shapley value, the normalization factor $1/n!$ in Equation 5 may be adjusted to the number of permutations used. As used herein, this will be referred to as a renormalized Equation 5. The structured family of permutations may also correspond to a structured family of subsets according to Equation 4 and, if these subsets are used to approximate the Shapley value, then the normalization factors in Equation 3 may be adjusted for the actual numbers of subsets (and sizes $i$ used). As used herein, this will be referred to as a renormalized Equation 3. While these approaches are similar with respect to their use of a small number of structured samples to approximate an exponential number of summands, one having ordinary skill in the art will appreciate that each approach to normalization is different.

While some of these computations describe above are described as computing the cost for a single data center customer, other implementations may be organized to compute the costs for many or all data center customers simultaneously. For example, when enumerating a structured family of permutations, the system may use the renormalized Equation 5 to compute the approximate Shapley value for all data center customers.

An effect that may bias the approximation of the Shapley value is that computing the marginal costs $m(S, a_j)$ for a customer $a_j$ may be sensitive to the presence of another customer $a_k$ in the set $S$ and, for this reason, it may be beneficial to first construct family $\Pi^{(-j)}$ of cyclic permutations of the elements excluding $a_j$ and then extend these to the family of full permutations $\Pi$ by inserting $j$ in each possible position in each permutation in $\Pi^{(-j)}$.

In certain embodiments, randomization techniques may be combined with the above-described structured approaches to generating subsets. For example, several random permutations may be chosen first. Then, each random permutation may be elaborated to a family of permutations according to any of the methods described above by elaborating all the cyclic permutations of each random permutation, for example.

Because a typical data center manager often has a good idea as to what a "reasonably representative" set of data center customers might look like, he or she could construct a small collection of representative customers and a collection of representative subsets of data center customers and use those to compute an approximation of the Shapley value. The smaller numbers of representative customers and representative subsets may be used to approximate more efficiently the expression inside the first sum in Equation 3. Certain implementations may use the structuring techniques described above, such as the cyclic permutations, to derive a family of representative subsets from a representative set of data center customers.

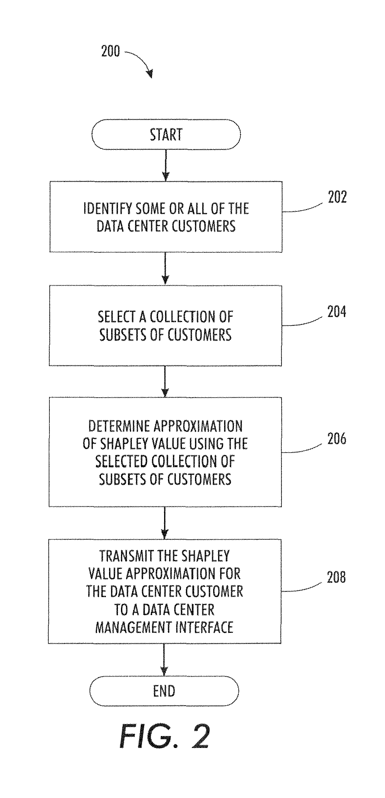

FIG. 2 is a flowchart illustrating a first example of a method 200 of determining a data center customer cost using a collection of data center customers derived using randomization, representative customers, or families of permutations of customers or representative customers.

At 202, a data center customer cost determination module such as the data center customer cost determination module 108 of FIG. 1, for example, identifies some or all of the data center customers. For example, the data center customer cost determination module may only identify active data center customers such as data center customers whose leases have not lapsed. The data center customers may have an initial arrangement or ordering. For example, the data center customers may be ordered by a date such as by the lease initiation or termination date, by size such as by the amount of initial or current data center resource allocation, alphabetically by data center customer name, or by virtually any other way of ordering a group of data center customers.

At 204, the data center customer cost determination module selects a collection of subsets of data center customers. The data center customer cost determination module may select the collection of subsets in any of a number of different ways. For example, the data center customer cost determination module may select the collection of subsets randomly or as a collection of representative subsets or as a collection of subsets derived from a family of permutations.

At 206, the data center customer cost determination module then determines an approximation of the Shapley value for a data center customer based on the selected collection of subsets in accordance with the techniques described herein.

At 208, the data center customer cost determination module transmits the generated approximate Shapley value for the data center customer to a data center management interface such as the data center management module 102 of FIG. 1, for example.

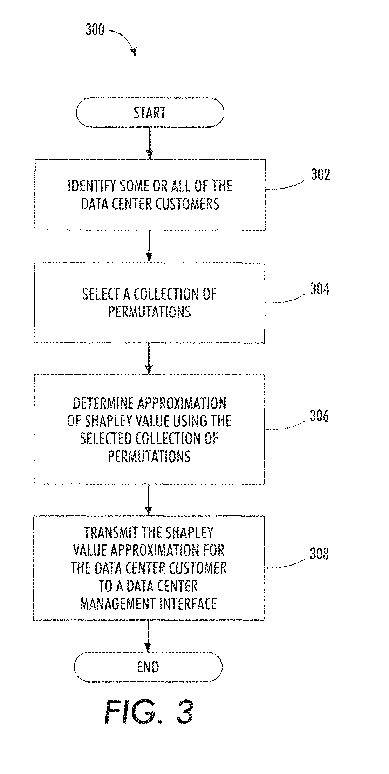

FIG. 3 is a flowchart illustrating a second example of a method 300 of determining a data center customer cost using data center customer randomization techniques. At 302, a data center customer cost determination module such as the data center customer cost determination module 108 of FIG. 1, for example, identifies some or all of the data center customers. This step is similar to step 202 of FIG. 2.

At 304, the data center customer cost determination module selects a collection of permutations of data center customers. At 306, the data center customer cost determination module determines an approximation of the Shapley value based on the collection of permutations as selected at 304.

At 308, the data center customer cost determination module transmits the generated approximate Shapley value for the data center customer to a data center management interface such as the data center management module 102 of FIG. 1, for example.

DATA CENTER CUSTOMER COST DETERMINATION USING GROUPINGS OF HOMOGENEOUS DATA CENTER CUSTOMERS

In certain situations, the total set of data center customers $A$ may be partitioned into $N$ disjoint groups $A_i$ of size $n_i$, where the data center customers in each group $A_i$ may be treated as identical for computational purposes. This can arise, for example, in situations where a data center is operated such that customers choose from a small number of categories of SLA agreements. The data center resource needs of customers sharing the same SLA are generally similar enough that the system may consider approximating the cost computation by assuming that the members of each group have identical characteristics that are representative of the group. The computation of the marginal cost m (S,a) is likely to be much more sensitive to the kinds of SLAs in S than to the specific customers in S.

Given a subset $S$ of data center customers whose entries are the number of data center customers in $S$ from each group, a corresponding vector $\mathbf{i} := (i_1, ..., i_N)$ may be defined such that $i^*$ represents a sum of all the entries of $\mathbf{i}$ (i.e., $i^* = |S|$). Because the data center customers within each group are identical, any two sets $S_1$ and $S_2$ having the same number of data center customers from each group will have the same optimal costs. In other words, $v(S_1)$, $v(S_2)$, and $v(\mathbf{i})$ are all equal. Therefore, the marginal costs will also be equal, i.e., $m(S_1, a)$ and $m(S_2, a)$ are equal. Without loss of generality, one may assume that $a$ is in the group $A_1$. The Shapley value for the cost of data center customer a may be expressed as the following:

$$ s(A, a \in A_1) \quad = \quad \frac{1}{n} \sum_{\mathbf{i}=(0,...,0)}^{(n_1,...,n_N)} \binom{n-1}{i^\star}^{-1} \binom{n_1-1}{i_1} \binom{n_2}{i_2} \cdots \binom{n_N}{i_N} \; m(\mathbf{i}, a) \qquad \text{(Equation 6)} $$

In the definition above, $m(\mathbf{i}, a) := v(\mathbf{i} + e_1) - v(\mathbf{i})$, and $e_1 = (1, 0, ..., 0)$. One having ordinary skill in the art will appreciate that this definition of the Shapley value involves only $O(n_1 \times ... \times n_N)$ evaluations of $m(\mathbf{i}, a)$. In other words, the Shapley cost depends on the number of data center customers and each subgroup of customers, where all of the data center customers in each subgroup $A_k$ are identical in that they each present the same data center resource needs and reservation requirements to the optimization. Equation 6 allows for the marginal costs associated with element $a$, for which the Shapley value is being computed, to be different from the other members of its group. In other words, each group of customers may be assumed to be populated by identical, representative customers, whereas $a$ is allowed to differ from the representative for its group.

The computational complexity is consequently reduced from being exponential in the number of data center customers to being exponential only in the number of groups, which is usually significantly smaller as a typical data center can have hundreds of data center customers but may have less than five data center customer groups. Also, the number of requests to be sent by a data center customer cost determination module to a data center resource optimization module may be significantly reduced as the data center customer cost determination module need only query the data center resource optimization module for a smaller number of combinations.

In certain embodiments, it is possible to further reduce the computation by recognizing that, where data center customers are homogenous within certain groups, it would be equitable to consider only those subsets with $\mathbf{i} := (i_1, ..., i_N)$ that are representative in the sense that they are proportional to the customer group sizes $n := (n_1, ..., n_N)$. Ideally $\mathbf{i} = \alpha \, \mathbf{n}$ but, since these are discrete vectors, the system may constrain $\mathbf{i}$ to be close to being proportional to $\mathbf{n}$. This may be described as a balanced shuffling of $N$ distinct groups, where each group contains indistinguishable elements. In a balanced shuffle, each prefix has each group represented approximately proportional to the group sizes. There are several methods that may be used to generate balanced shuffles. In one method, for example, elements may be drawn from a group of customers that is most underrepresented in the prefix, e.g., the group k with the largest difference $(i^*/n^*) \, n_k - i_k$. In other methods, elements may be drawn according to a probability distribution that favors the more underrepresented groups.

Using a set $H$ of one or more balanced shuffles, the system may determine a structured family of subsets for computing the cost for $a$, taking each balanced shuffle $h_j$ in the set H and generating $n_1$ shuffles, each of which may be generated by placing $a$ in a different location in $h_j$ that is already occupied by an element of $A_1$. This creates an expanded set of shuffles $H^*$, expanding H by a factor $n_1$. The structured family of subsets are the elements in the shuffles, *e.g.*, permutations, proceeding $a$. To compute the approximate Shapley value for $a$, a renormalized version of Equation 5 may be applied to the structured family of permutations H*, or a renormalized version of Equation 3 may be applied to the structured family of subsets.

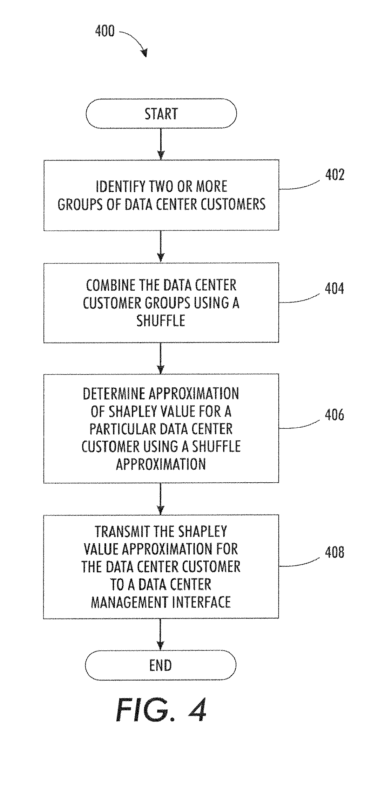

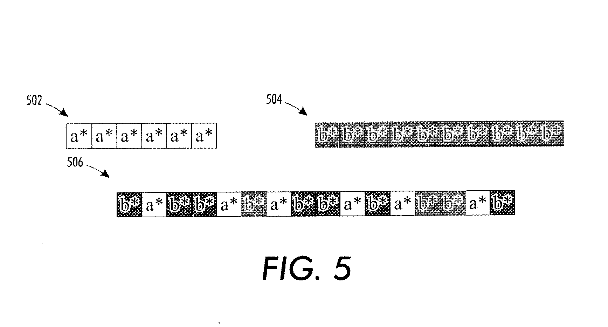

FIG. 4 is a flowchart illustrating a first example of a method 400 of determining a data center customer cost using data center customer grouping techniques. At 402, a data center customer cost determination module such as the data center customer cost determination module 108 of FIG. 1, for example, identifies two or more groups of data center customers. For example, the data center customer cost determination module may group together data center customers that are identical in that the data center resource usage models of the data center customers are at least substantially similar so that they may be replaced by identical representatives. For example, the data center customer cost determination module may group together data center customers that are identical, e.g., their service level agreements are at least substantially similar. FIG. 5 illustrates an example of a graphical representation of two sets of data center customer groups 502 and 504 that may be identified by the data center customer cost determination module.

At 404, the data center customer cost determination module performs a shuffle operation on the two groups of data center customers 502 and 504 by combining the data center customers of both groups into a single grouping 506 as illustrated in FIG. 5.

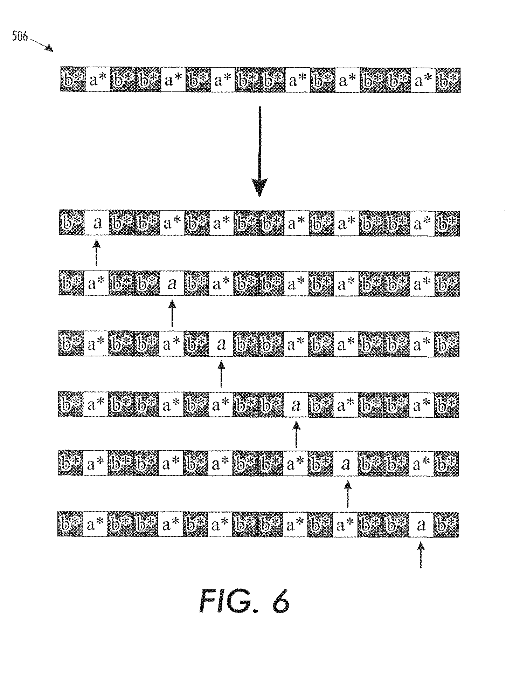

At 406, the data center customer cost determination module determines an approximation of the Shapley value for a data center customer by employing an approximation strategy based on shuffling. FIG. 6 illustrates an example of a graphical representation of determining an approximation of the Shapley value for data center customer $a$ within one or more shuffles 506 by creating a family of permutations by inserting customer $a$ systematically at all positions of the first group in a shuffle, and using the approximation techniques described herein such as a renormalized Equation 5, for example.

At 408, the data center customer cost determination module transmits the generated approximate Shapley value to a data center management interface such as the data center management module 102 of FIG. 1, for example.

DATA CENTER CUSTOMER COST DETERMINATION USING GROUPINGS OF HETEROGENEOUS DATA CENTER CUSTOMERS

In certain situations, data center customers may be grouped into $N$ disjoint groups $\{A_i\}$ such that the data center customers within each group are similar but not identical. If the data center customers within a group are similar enough, the data center customer cost determination module may simply approximate the system by $N$ homogeneous groups, in which each group has identical data center customers that are equal to the average of the actual non-identical data center customers in the original group. A "reasonable similarity" may be determined in a number of different ways. For example, a test template of a certain number of data center customers, such as a group of 10 data center customers, may be used to test a new data center customer against the test template by comparing the new data center customer's marginal cost or full Shapley cost to that of the test template.

If the data center customers within each group are sufficiently different, however, a definition of the Shapley value for a data center customer $a$ within a partition $A_1$ may be written as:

$$s(\mathcal{A}, a \in \mathcal{A}_1) \quad := \quad \frac{1}{n} \sum_{i=1}^{n} \binom{n-1}{i}^{-1} \sum_{\substack{\mathcal{S} = \mathcal{S}_1 \cup \cdots \cup \mathcal{S}_N \\ \mathcal{S}_1 \subset \mathcal{A}_1 \backslash \{a\}, \ldots, \mathcal{S}_N \subset \mathcal{A}_N \\ |\mathcal{S}_1| + \cdots + |\mathcal{S}_N| = i}} m(\mathcal{S}, a).$$

(Equation 7)

The data center customer cost determination module may then use a randomized approach to choosing sets $S$. The following normalization factor:

$$\binom{n-1}{i}^{-1}$$

(Equation 8)

may be adjusted to the actual number of sample sets of size $i$ used in the approximation. The random sample may be improved by adjusting the number of sample sets chosen of each size $i$. The sample may also be improved by choosing sets S where the number chosen from each group is proportionally representative of the size of each group, *e.g.,* $|S_1|$ ~ $|A_1 - 1||S|/ (|A|-1)$ and for k > 1, $|S_k|$ ~ $|A_4||S| / (|A|-1)$.

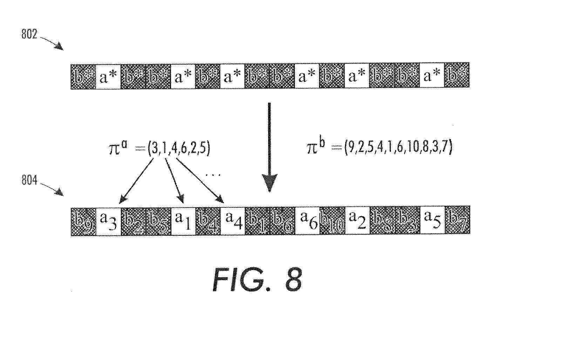

In another approach, the balanced shuffling approach described above may be combined with the structured families of permutations described above. One or more balanced shuffles may be used to determine the positions of each group within the permutation, as illustrated in FIG. 8. Then, for each balanced shuffle, the structured families of permutations of the groups of customers may be used to determine the position of individual members of the group within the group locations in the larger shuffle.

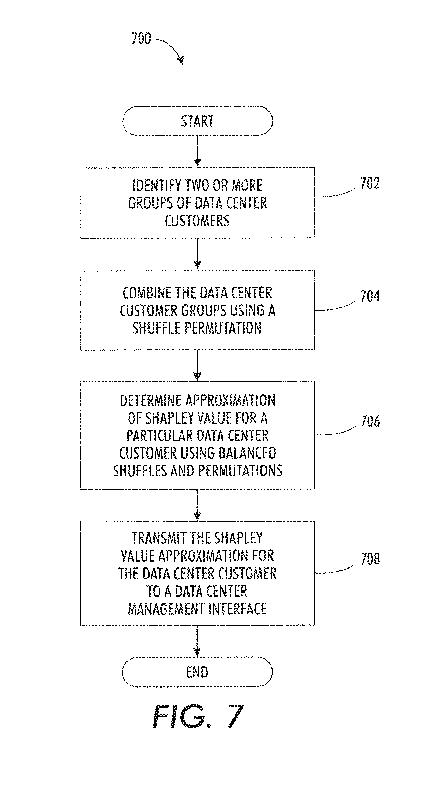

FIG. 7 is a flowchart illustrating a second example of a method 700 of determining a data center customer cost using data center customer grouping techniques, and FIG. 8 illustrates an example of a graphical representation of a shuffle of a collection of subsets of data center customer groups 802 as performed in connection with the data center customer cost determination method 700 illustrated in FIG. 7.

At 702, a data center customer cost determination module such as the data center customer cost determination module 108 of FIG. 1, for example, identifies two data center customer groups.

At 704, the data center customer cost determination module performs a shuffle permutation operation on the two groups of data center customers by combining the data center customers of both groups into a single grouping 802.

At 706, the data center customer cost determination module determines an approximation of the Shapley value for a data center customer using one or more balanced shuffles 802 combined with permutations within the groups of the shuffle 804. The resulting collection of permutations may be used to approximate the Shapley value using a renormalized Equation 5, or using Equation 4 to create a collection of subsets and using a renormalized Equation 7.

At 708, the data center customer cost determination module transmits the generated approximate Shapley value for the data center customer to a data center management interface such as the data center management module 102 of FIG. 1, for example.

The following discussion is intended to provide a brief, general description of a suitable machine in which certain embodiments of the disclosed technology can be implemented. As used herein, the term "machine" is intended to broadly encompass a single machine or a system of communicatively coupled machines or devices operating together. Exemplary machines can include computing devices such as personal computers, workstations, servers, portable computers, handheld devices, tablet devices, and the like.

Typically, a machine includes a system bus to which processors, memory (e.g., random access memory (RAM), read-only memory (ROM), and other state-preserving medium), storage devices, a video interface, and input/output interface ports can be attached. The machine can also include embedded controllers such as programmable or nonprogrammable logic devices or arrays, Application Specific Integrated Circuits (ASICs), embedded computers, smart cards, and the like. The machine can be controlled, at least in part, by input from conventional input devices (e.g., keyboards and mice), as well as by directives received from another machine, interaction with a virtual reality (VR) environment, biometric feedback, or other input signal.

The machine can utilize one or more connections to one or more remote machines, such as through a network interface, modem, or other communicative coupling. Machines can be interconnected by way of a physical and/or logical network, such as an intranet, the Internet, local area networks, wide area networks, etc. One having ordinary skill in the art will appreciate that network communication can utilize various wired and/or wireless short range or long range carriers and protocols, including radio frequency (RF), satellite, microwave, Institute of Electrical and Electronics Engineers (IEEE) 545.11, Bluetooth, optical, infrared, cable, laser, etc.

Embodiments of the disclosed technology can be described by reference to or in conjunction with associated data including functions, procedures, data structures, application programs, instructions, etc. that, when accessed by a machine, can result in the machine performing tasks or defining abstract data types or low-level hardware contexts. Associated data can be stored in, for example, volatile and/or non-volatile memory (e.g., RAM and ROM) or in other storage devices and their associated storage media, which can include hard-drives, floppy-disks, optical storage, tapes, flash memory, memory sticks, digital video disks, biological storage, and other tangible, physical storage media.

Associated data can be delivered over transmission environments, including the physical and/or logical network, in the form of packets, serial data, parallel data, propagated signals, etc., and can be used in a compressed or encrypted format. Associated data can be used in a distributed environment, and stored locally and/or remotely for machine access.

It will be appreciated that various of the above-disclosed and other features and functions, or alternatives thereof, may be desirably combined into many other different systems or applications. Various presently unforeseen or unanticipated alternatives, modifications, variations, or improvements therein may be subsequently made by those skilled in the art which are also intended to be encompassed by the following claims.

**Claims**

1. A data center management system, comprising:

    a data center customer profile corresponding to a data center customer, the data center customer profile comprising a data center resource usage model and a service level agreement (SLA);
    a data center resource optimization module operable to determine a data center resource allocation for the data center customer based at least in part on the data center customer profile; and
    a data center customer cost determination module operable to determine a data center customer cost, the data center customer cost representing a cost to the data center of providing data center resources to the data center customer.

2. The data center management system of claim 1, wherein the data center customer cost determination module is operable to determine the data center customer cost by computing an approximation to a cooperative game solution concept.

3. The data center management system of claim 2, wherein the data center customer cost determination module is operable to compute the approximation by approximating a Shapley value for the data center customer.

4. The data center management system of claim 2 or claim 3, wherein the data center customer cost determination module is operable to compute the approximation based at least in part on a selected collection of subsets of data center customers.

5. The data center management system of claim 2, 3 or 4, wherein the data center customer cost determination module is operable to compute the approximation based at least in part on a selected collection of permutations of data center customers.

6. The data center management system of any of claims 2 to 5, wherein the data center customer cost determination module is operable to compute the approximation by establishing one or more groupings of data center customers based on similarities in the corresponding data center customer profiles.

7. The data center management system of any of the preceding claims, further comprising a data center customer registration module operable to generate the data center customer profile.

8. The data center management system of any of the preceding claims, further comprising a data center management interface, wherein the data center customer cost determination module is operable to provide information pertaining to the data center customer cost to a data center manager via the data center management interface.

100

| | |
|---|---|
| 102 — DATA CENTER MANAGEMENT INTERFACE | DATA CENTER CUSTOMER COST DETERMINATION MODULE — 108 |
| 104 — DATA CENTER CUSTOMER REGISTRATION MODULE | DATA CENTER RESOURCE OPTIMIZATION MODULE — 106 |
| 112 — DATA CENTER RESOURCE USAGE MODEL UPDATE MODULE | OPERATIONS CENTER — 110 |

*FIG. 1*

200

START

IDENTIFY SOME OR ALL OF THE
DATA CENTER CUSTOMERS — 202

SELECT A COLLECTION OF
SUBSETS OF CUSTOMERS — 204

DETERMINE APPROXIMATION
OF SHAPLEY VALUE USING THE
SELECTED COLLECTION OF
SUBSETS OF CUSTOMERS — 206

TRANSMIT THE SHAPLEY
VALUE APPROXIMATION FOR
THE DATA CENTER CUSTOMER
TO A DATA CENTER
MANAGEMENT INTERFACE — 208

END

## FIG. 2

300

START

IDENTIFY SOME OR ALL OF THE
DATA CENTER CUSTOMERS — 302

SELECT A COLLECTION OF
PERMUTATIONS — 304

DETERMINE APPROXIMATION
OF SHAPLEY VALUE USING THE
SELECTED COLLECTION OF
PERMUTATIONS — 306

TRANSMIT THE SHAPLEY
VALUE APPROXIMATION FOR
THE DATA CENTER CUSTOMER
TO A DATA CENTER
MANAGEMENT INTERFACE — 308

END

*FIG. 3*

400

START

IDENTIFY TWO OR MORE
GROUPS OF DATA CENTER CUSTOMERS — 402

COMBINE THE DATA CENTER
CUSTOMER GROUPS USING A
SHUFFLE — 404

DETERMINE APPROXIMATION
OF SHAPLEY VALUE FOR A
PARTICULAR DATA CENTER
CUSTOMER USING A SHUFFLE
APPROXIMATION — 406

TRANSMIT THE SHAPLEY
VALUE APPROXIMATION FOR
THE DATA CENTER CUSTOMER
TO A DATA CENTER
MANAGEMENT INTERFACE — 408

END

## FIG. 4

502

a\* | a\* | a\* | a\* | a\* | a\*

504

b\* b\* b\* b\* b\* b\* b\* b\* b\* b\*

506

b\* | a\* | b\* | b\* | a\* | b\* | a\* | b\* | b\* | a\* | b\* | a\* | b\* | b\* | a\* | b\*

# FIG. 5

FIG. 6

700

START

IDENTIFY TWO OR MORE
GROUPS OF DATA CENTER
CUSTOMERS — 702

COMBINE THE DATA CENTER
CUSTOMER GROUPS USING A
SHUFFLE PERMUTATION — 704

DETERMINE APPROXIMATION
OF SHAPLEY VALUE FOR A
PARTICULAR DATA CENTER
CUSTOMER USING BALANCED
SHUFFLES AND PERMUTATIONS — 706

TRANSMIT THE SHAPLEY
VALUE APPROXIMATION FOR
THE DATA CENTER CUSTOMER
TO A DATA CENTER
MANAGEMENT INTERFACE — 708

END

FIG. 7

$\pi^a = (3,1,4,6,2,5)$      $\pi^b = (9,2,5,4,1,6,10,8,3,7)$

FIG. 8

Europäisches
Patentamt

European
Patent Office

Office européen
des brevets

# EUROPEAN SEARCH REPORT

Application Number

EP 11 17 6817

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * | 1-8 | INV. G06Q10/00 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 3 November 2011 | Bassanini, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 17 6817

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| | ----- | | |
| | | | TECHNICAL FIELDS SEARCHED (IPC) |

The present search report has been drawn up for all claims

| Place of search | Date of completion of the search | Examiner |
|---|---|---|
| The Hague | 3 November 2011 | Bassanini, Anna |

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 25311108 A